# EUROPEAN PATENT SPECIFICATION

(11) **EP 4 135 480 B1**
(45) Date of publication and mention of the grant of the patent: **18.06.2025**
(21) Application number: 21190515.3
(22) Date of filing: 10.08.2021
(51) Int. Cl.: H05B 45/3725, H02M 3/00

(54) **LED DRIVER HAVING SELF-ADJUSTING FEED-FORWARD CONTROL**
LED-TREIBER MIT SELBSTVERSTELLENDER VORWÄRTSREGELUNG
PILOTE DE DEL DOTÉ D'UNE CORRECTION AVAL AUTO-RÉGLABLE

(43) Date of publication of application: 15.02.2023
(73) Proprietor: Tridonic GmbH & Co KG, 6851 Dornbirn (AT)
(72) Inventor: Schertler, Markus, 6850 Dornbirn (AT); Dimic, Nikola, 6850 Dornbirn (AT)
(74) Representative: Rupp, Christian

(56) References cited:
- WO-A1-2016/131719
- US-A1- 2017 264 185

## Description

### Technical Field

The present disclosure relates to lighting technology, and in particular to a driver for at least one LED and a luminaire comprising the same.

### Background Art

LED drivers typically provide LED lighting means with an electrical quantity, such as a current or a voltage, in accordance with a nominal value of the electrical quantity, based on closed-loop control.

Especially if case of a relatively slow controller of the closed-loop control, LED drivers supplied off an AC mains supply may experience a disturbance of an internal DC link voltage (V_{BUS}) in the form of an superimposed ripple (ΔV_{BUS}), which originates from a rectification of the AC mains voltage and thus has twice an AC mains frequency.

This internal ripple may depend on a capacity of the internal DC link and may carry through to the provided electrical quantity depending on a loading of the LED driver, but as it can be measured it may be compensated for by appropriate adjustment of the control variable of the closed-loop control, known as feed-forward (FEFO) control.

The controller of the closed-loop control will try to compensate the fed-back output ripple, wherein it tries to compensate the control error with a 180° phase shift. As repetitive internal ripple keeps the controller busy, a correctly adjusted FEFO control can help to increase a control margin.

The adjustment of the control variable is based on a FEFO gain, which is usually measured during design and set depending on several parameters which can be for e.g. the measured current or voltages of the controlled plant. This compensation process is cumbersome and adds production cost, may be inaccurate due to component tolerances and lifetime issues, and may lead to even higher output ripple in case of overcompensation.

WO 2016/131719 A1 discloses a driver which combines a feed-back control and a feed-forward control, the latter depending on a frequency component derived from an AC voltage input.

US 2017/264185 A1 discloses a driver which combines a feed-back control and a feed-forward control, the latter depending on a frequency component derived from a DC voltage input.

### Summary

In view of the above-mentioned drawbacks and limitations, the present disclosure aims to improve LED drivers of the background art.

This is achieved by the embodiments as defined by the appended independent claims. Preferred embodiments are set forth in the dependent claims and in the following description and drawings.

The invention is defined by a driver according to claim 1, with further embodiments set out in the dependent claims. A first aspect of the present invention relates to a driver for at least one LED. The driver comprises
a switched-mode power supply, SMPS, configured to supply the at least one LED; a closed-loop control for regulating a controlled variable supplied to the at least one LED in accordance with a reference variable; and a feed-forward control for adjusting a control variable of the closed-loop control in dependence of a frequency component of a control error of the closed-loop control and a frequency component of a DC link voltage of the driver.

The feed-forward control may comprise a first narrow-band filter configured to filter the control error; and a frequency component derivation unit configured to determine the frequency component of the control error of the closed-loop control.

The frequency component derivation unit may comprise a peak detection circuit configured to determine a magnitude of a peak value of the filtered control error at a center frequency of the first narrow-band filter.

The frequency component derivation unit may comprise a frequency transform circuit configured to determine a magnitude of a frequency transform of the filtered control error at a center frequency of the first narrow-band filter.

The feed-forward control may further comprise a second narrow-band filter configured to determine the frequency component of the DC link voltage of the driver.

The frequency component of the DC link voltage of the driver may comprise a filtered DC link voltage of the driver at a center frequency of the second narrow-band filter.

The respective center frequency of the first and second narrow-band filters may comprise a frequency in a range of twice an AC mains frequency ± 10%, and may preferably comprise a frequency of twice the AC mains frequency.

The AC mains frequency may comprise 50 Hz or 60 Hz.

The feed-forward control may further comprise a gain adjustment unit configured to switch a sign of a gain step width of the gain adjustment unit if the determined magnitude of the frequency component of the filtered control error exceeds a determined magnitude of the frequency component of the filtered control error of an immediately preceding control cycle of the closed-loop control; and adjust a value of a feed-forward gain by adding a value of the gain step width to the value of the feed-forward gain of the immediately preceding control cycle of the closed-loop control.

The gain adjustment unit may further be configured to retrieve an initial value of the feed-forward gain in dependence of the determined magnitude of the frequency component of the filtered control error from a lookup table of the driver.

The gain adjustment unit may further be configured to retrieve an initial value of the gain step width from the lookup table of the driver.

The feed-forward control may further be configured to adjust the control variable of the closed-loop control by adding a product of the adjusted value of the feed-forward gain and the frequency component of the DC link voltage of the driver.

The closed-loop control may further comprise a controller configured to provide the control variable in dependence of the control error; and a pulse width modulation, PWM, signal generator configured to provide a manipulated variable in dependence of the control variable. The controlled variable may comprise an average value of the current supplied to the at least one LED. The manipulated variable may comprise a PWM gate drive signal for power switches of the SMPS. The control variable may comprise a duty cycle of the PWM gate drive signal. The control error may comprise a differential of the controlled variable and the reference variable. The reference variable may comprise a nominal value of the current supplied to the at least one LED.

The controller may comprise a proportional-integral, PI, controller.

A second aspect of the present invention relates to a luminaire comprising a driver of the first aspect or any of its implementations; and at least one LED.

### Advantageous Effects

The present disclosure provides an LED driver having a self-adjusting feed-forward control.

That is to say, a correct FEFO gain adjustment can be guaranteed by incrementing (or decrementing) a FEFO gain in discrete steps, depending on an observed decline (or increase) of the output ripple. This procedure takes place until zero actual ripple is achieved, and may be carried out again if ripple re-emerges due to a varying loading of the driver or components aging, for example.

This avoids an adjustment of the FEFO gain at the design stage, which is cumbersome and prone to inaccuracies.

More specifically, the improved LED driver features no production FEFO adjustment costs, no R&D effort for preadjustment of the FEFO control, a best-possible FEFO adjustment achieved, no additional costs due to SW strategy (no additional HW necessary), a robust stepper strategy, additional control phase margin for a PI-based control due to optimal FEFO adjustment, and a robust driver.

The technical effects and advantages described above in relation with the LED driver equally apply to the luminaire comprising such an LED driver.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a luminaire comprising a driver, both in accordance with the present disclosure; and
- FIG. 2: illustrates a driver in accordance with the present disclosure; and
- FIG. 3: illustrates a control approach in accordance with the present disclosure.

### Detailed Descriptions of Drawings

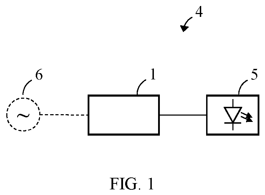

FIG. 1 illustrates a luminaire 4 comprising a driver 1, both in accordance with the present disclosure.

The luminaire 4 comprises at least one LED 5, and a driver 1 of the first aspect or any of its implementations configured to supply the at least one LED 5 off an AC mains supply 6 suggested in FIG. 1 by dashed lines. This driver 1 is described in more detail below.

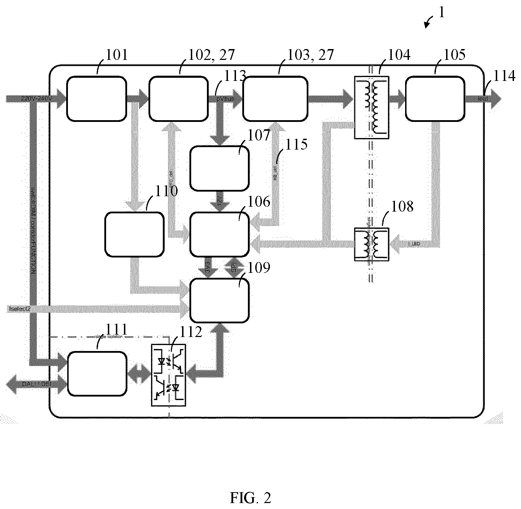

FIG. 2 illustrates a driver 1 for an LED load in accordance with the present disclosure.

The driver 1 comprises a DC/DC converter 103 configured to provide a DC output current 114, I_{LED} for the LED load in dependence of a DC link/bus voltage 113, V_{BUS} and a duration of a switching period 115, T_{HB} of the DC/DC converter 103.

The DC/DC converter 103 may comprise a half-bridge (HB) resonant converter, which may in turn comprise a resonant tank circuit of LLC type, for example.

On an input side, the driver 1 of FIG. 1 may further comprise a power factor correction (PFC) converter 102, such as a boost converter, configured to provide the DC link/bus voltage 113, V_{BUS} for the DC/DC converter 103, and a filter and rectifier circuitry 101 configured to filter electromagnetic noise and to rectify an AC mains input voltage at an input of the PFC converter 102.

On an output side, the driver 1 of FIG. 1 may further comprise an isolating transformer 104 and a subsequent rectifier and sensing circuitry 105 configured to provide, via a further isolating transformer 108, an indication of the DC output current 114, I_{LED} for the LED load.

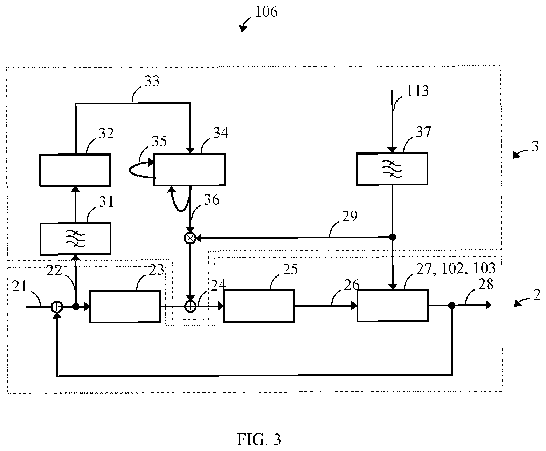

The driver 1 further comprises a control unit 106, 109 which will be explained in more detail in connection with FIG. 3 below. In the example of FIG. 1, the control unit 106, 109 includes an application-specific integrated circuit (ASIC) 106 and a microcontroller (µC) 109 and is supplied by a DC/DC converter 107. The µC 109 is configured to measure and detect an AC or DC mains input voltage by means of a mains detection circuitry 110.

FIG. 1 further shows a digital addressable lighting interface (DALI) unit 111 interconnected with the control unit 106, 109 by means of optocouplers 112. The DALI unit 111 may receive dimming commands for varying an operating point of the DC/DC converter 103.

FIG. 3 illustrates a control approach in accordance with the present disclosure.

In particular, the control approach may be implemented by the control unit 106 shown in FIG. 2.

The driver 1 comprises a switched-mode power supply, SMPS, 27, 102, 103 configured to supply the at least one LED 5.

As used herein, an SMPS may refer to an electric circuit that is configured to transfer power from an AC source, such as an AC mains supply, to DC loads based on at least one switch that is continually toggled between low-dissipation, full-on and full-off states in accordance with a duty cycle.

The driver 1 further comprises a closed-loop control 2 for regulating a controlled variable 28 supplied to the at least one LED 5 in accordance with a reference variable 21.

As used herein, a closed-loop control may refer to a control system which adjusts its input (i.e., control error) to take account of how it affects the load.

The driver 1 further comprises a feed-forward control 3 for adjusting a control variable 24 of the closed-loop control 2 in dependence of a frequency component of a control error 22 of the closed-loop control 2 and a frequency component 29 of a DC link/bus voltage 113 of the SMPS 27, 102, 103.

As used herein, a feed-forward control may refer to an element within a control system which adjusts the controller's output (i.e., the controlled variable) to take account of a known or detectable disturbance.

The feed-forward control 3 may comprise a first narrow-band filter 31 configured to filter the control error 22; and a frequency component derivation unit 32 configured to determine the frequency component of the control error 22 of the closed-loop control 2.

As used herein, a narrow-band filter may refer to a band-pass filter having a fractional bandwidth (i.e., absolute bandwidth divided by the center frequency) of less than a predetermined ratio, wherein the absolute bandwidth is given by a differential between upper and lower cutoff frequencies of the filter.

In particular, the frequency component derivation unit 32 may comprise a peak detection circuit configured to determine a magnitude 33 of a peak value of the filtered control error at a center frequency of the first narrow-band filter 31, or alternatively a frequency transform circuit configured to determine a magnitude 33 of a frequency transform of the filtered control error at a center frequency of the first narrow-band filter 31. The resulting value represents the absolute output ripple.

The feed-forward control 3 may further comprise a second narrow-band filter 37 configured to determine the frequency component 29 of the DC link/bus voltage 113 of the SMPS 27, 102, 103.

In particular, the frequency component 29 of the DC link/bus voltage 113 of the SMPS 27, 102, 103 may comprise a filtered DC link voltage of the SMPS 27, 102, 103 at a center frequency of the second narrow-band filter 37.

The respective center frequency of the first and second narrow-band filters 31, 37 may comprise a frequency in a range of twice an AC mains frequency ± 10%, and may preferably comprise a frequency of twice the AC mains frequency, wherein the AC mains frequency may comprise 50 Hz or 60 Hz, depending on a nominal frequency of the applicable AC mains supply.

The feed-forward control 3 may further comprise a gain adjustment unit 34 configured to switch a sign of a gain step width 35 of the gain adjustment unit 34 if the determined magnitude 33 of the frequency component of the filtered control error exceeds a determined magnitude 33 of the frequency component of the filtered control error of an immediately preceding control cycle of the closed-loop control 2; and adjust a value of a feed-forward gain 36 by adding a value of the gain step width 35 to the value of the feed-forward gain 36 of the immediately preceding control cycle of the closed-loop control 2.

For example, switching the sign of the gain step width 35 may be achieved by a switch decider circuit which is configured to compare the determined magnitude 33 of the current control cycle of the closed-loop control 2 with its value of the immediately preceding control cycle. If the absolute output ripple improved due to the last action taken (+/-), the switch position is maintained, so that another addition (or subtraction) is applied to the feed-forward gain 36. Otherwise the switch position is toggled and a subtraction (or addition) is applied to the feed-forward gain 36.

The feed-forward control 3 may further be configured to adjust the control variable 24 of the closed-loop control 2 by adding a product of the adjusted value of the feed-forward gain 36 and the frequency component 29 of the DC link/bus voltage 113 of the SMPS 27, 102, 103.

This procedure takes place in every control cycle of the closed-loop control 2 until zero output ripple is achieved, and may be carried out over and over again if ripple re-emerges due to a varying loading of the driver, for example. When this happens, the switch position is toggled and therefore the sign of the gain step width 35 is changed.

In FIG. 3 it is further indicated by the arrows directed at itself that the gain adjustment unit 34 is configured to store the values of the gain step width 35 and the feed-forward gain 36 for retrieval as the determined magnitude 33 of the frequency component of the filtered control error "of the immediately preceding control cycle of the closed-loop control 2" and the feed-forward gain 36 "of the immediately preceding control cycle of the closed-loop control 2", respectively.

The gain adjustment unit 34 may further be configured to retrieve an initial value of the feed-forward gain 36 in dependence of the determined magnitude 33 of the frequency component of the filtered control error from a lookup table of the driver 1 so as to achieve the optimal feed-forward gain 36 earlier. Furthermore, the gain adjustment unit 34 may further be configured to retrieve an initial value of the gain step width 35 from the lookup table of the driver 1.

The closed-loop control 2 may further comprise a controller 23, such as a proportional-integral, PI, controller, configured to provide the control variable 24 in dependence of the control error 22; and a pulse width modulation, PWM, signal generator 25 configured to provide a manipulated variable 26 in dependence of the control variable 24. In particular, the controlled variable 28 may comprise an average value of the DC output current 114, I_{LED} supplied to the at least one LED 5; the manipulated variable 26 may comprise a PWM gate drive signal 26 for power switches of the SMPS 27, 102, 103; the control variable 24 may comprise a duty cycle of the PWM gate drive signal 26; the control error 22 may comprise a differential of the controlled variable 28 and the reference variable 21; and the reference variable 21 may comprise a nominal value of the current supplied to the at least one LED 5.

## Claims

1. A driver (1) for at least one LED, the driver (1) comprising
a switched-mode power supply, SMPS, (27) configured to supply the at least one LED;
a closed-loop control (2) for regulating a controlled variable (28) supplied to the at least one LED in accordance with a reference variable (21);
**characterized by**
a feed-forward control (3) for adjusting a control variable (24) of the closed-loop control (2) in dependence of a frequency component of a control error (22) of the closed-loop control (2) and a frequency component (29) of a DC link voltage of the SMPS (27).

2. The driver (1) of claim 1,
the feed-forward control (3) comprising
a first narrow-band filter (31) configured to filter the control error (22); and
a frequency component derivation unit (32) configured to determine the frequency component of the control error (22) of the closed-loop control (2).

3. The driver (1) of claim 2,
the frequency component derivation unit (32) comprising
a peak detection circuit configured to determine a magnitude (33) of a peak value of the filtered control error at a center frequency of the first narrow-band filter (31).

4. The driver (1) of claim 2,
the frequency component derivation unit (32) comprising
a frequency transform circuit configured to determine a magnitude (33) of a frequency transform of the filtered control error at a center frequency of the first narrow-band filter (31).

5. The driver (1) of any one of the claims 1 to 4,
the feed-forward control (3) further comprising
a second narrow-band filter (78) configured to determine the frequency component (29) of the DC link voltage of the SMPS (27).

6. The driver (1) of claim 5,
the frequency component (29) of the DC link voltage of the SMPS (27) comprising a filtered DC link voltage of the SMPS (27) at a center frequency of the second narrow-band filter (37).

7. The driver (1) of any one of the claims 5 to 6 when dependent on any one of the claims 2-4,
the respective center frequency of the first and second narrow-band filters (31, 37) comprising a frequency in a range of twice an AC mains frequency ± 10%, and preferably comprising twice the AC mains frequency.

8. The driver (1) of claim 7,
the AC mains frequency comprising 50 Hz or 60 Hz.

9. The driver (1) of any one of the claims 3 to 8,
the feed-forward control (3) further comprising
a gain adjustment unit (34) configured to
switch a sign of a gain stepwidth (35) of the gain adjustment unit (34) if the determined magnitude (33) of the frequency component of the filtered control error exceeds a determined magnitude (33) of the frequency component of the filtered control error of an immediately preceding control cycle of the closed-loop control (2); and
adjust a value of a feed-forward gain (36) by adding a value of the gain stepwidth (35) to the value of the feed-forward gain (36) of the immediately preceding control cycle of the closed-loop control (2).

10. The driver (1) of claim 9,
the gain adjustment unit (34) further being configured to
retrieve an initial value of the feed-forward gain (36) in dependence of the determined magnitude (33) of the frequency component of the filtered control error from a lookup table of the driver (1).

11. The driver (1) of claim 9 or claim 10,
the gain adjustment unit (34) further being configured to
retrieve an initial value of the gain stepwidth (35) from the lookup table of the driver (1).

12. The driver (1) of any one of the claims 9 to 11,
the feed-forward control (3) further being configured to
adjust the control variable (24) of the closed-loop control (2) by adding a product of the adjusted value of the feed-forward gain (36) and the frequency component (29) of the DC link voltage of the SMPS (27).

13. The driver (1) of any one of the preceding claims,
the closed-loop control (2) further comprising
a controller (23) configured to provide the control variable (24) in dependence of the control error (22); and
a pulse width modulation, PWM, signal generator (25) configured to provide a manipulated variable (26) in dependence of the control variable (24);
the controlled variable (28) comprising an average value of the current supplied to the at least one LED;
the manipulated variable (26) comprising a PWM gate drive signal (26) for power switches of the SMPS (27).
the control variable (24) comprising a duty cycle of the PWM gate drive signal (26);
the control error (22) comprising a differential of the controlled variable (28) and the reference variable (21); and
the reference variable (21) comprising a nominal value of the current supplied to the at least one LED.

14. The driver (1) of claim 13,
the controller (23) comprising a proportional-integral, PI, controller.

15. A luminaire (4), comprising
a driver (1) of any one of the claims 1 to 14; and
at least one LED (5).

## Patentansprüche

1. Treiber (1) für mindestens eine LED, der Treiber (1) umfassend
ein Schaltnetzteil, SMPS, (27), das konfiguriert ist, um die mindestens eine LED zu versorgen;
eine Regelung (2) zum Regeln einer Regelgröße (28), mit der die mindestens einen LED gemäß einer Führungsgröße (21) versorgt wird;
**gekennzeichnet durch**
eine Vorwärtsregelung (3) zum Anpassen einer Regelgröße (24) der Regelung (2) in Abhängigkeit von einer Frequenzkomponente einer Regelabweichung (22) der Regelung (2) und einer Frequenzkomponente (29) einer Zwischenkreisspannung des Schaltnetzteils (27).

2. Treiber (1) nach Anspruch 1,
die Vorwärtsregelung (3) umfassend
ein erstes Schmalbandfilter (31), das konfiguriert ist, um die Regelabweichung (22) zu filtern; und
eine Frequenzkomponenten-Ableitungseinheit (32), die konfiguriert ist, um die Frequenzkomponente der Regelabweichung (22) der Regelung (2) zu bestimmen.

3. Treiber (1) nach Anspruch 2,
die Frequenzkomponenten-Ableitungseinheit (32) umfassend
eine Spitzenerkennungsschaltung, die konfiguriert ist, um eine Größe (33) eines Spitzenwerts der gefilterten Regelabweichung bei einer Mittenfrequenz des ersten Schmalbandfilters (31) zu bestimmen.

4. Treiber (1) nach Anspruch 2,
die Frequenzkomponenten-Ableitungseinheit (32) umfassend
eine Frequenztransformationsschaltung, die konfiguriert ist, um eine Größe (33) einer Frequenztransformation der gefilterten Regelabweichung bei einer Mittenfrequenz des ersten Schmalbandfilters (31) zu bestimmen.

5. Treiber (1) nach einem der Ansprüche 1 bis 4,
die Vorwärtsregelung (3) ferner umfassend
ein zweites Schmalbandfilter (78), das konfiguriert ist, um die Frequenzkomponente (29) der Zwischenkreisspannung des SMPS (27) zu bestimmen.

6. Treiber (1) nach Anspruch 5,
die Frequenzkomponente (29) der Zwischenkreisspannung des SMPS (27) umfassend eine gefilterte Zwischenkreisspannung des SMPS (27) bei einer Mittenfrequenz des zweiten Schmalbandfilters (37).

7. Treiber (1) nach einem der Ansprüche 5 bis 6, sofern abhängig von einem der Ansprüche 2 bis 4,
die jeweilige Mittenfrequenz des ersten und des zweiten Schmalbandfilters (31, 37) umfassend eine Frequenz in einem Bereich der doppelten Wechselstromnetzfrequenz ± 10 % und vorzugsweise umfassend die doppelte Wechselstromnetzfrequenz.

8. Treiber (1) nach Anspruch 7,
die Wechselstromnetzfrequenz umfassend 50 Hz oder 60 Hz.

9. Treiber (1) nach einem der Ansprüche 3 bis 8,
die Vorwärtsregelung (3) ferner umfassend
eine Verstärkungsanpassungseinheit (34), die konfiguriert ist zum
Umschalten eines Vorzeichens einer Verstärkungsstufenbreite (35) der Verstärkungsanpassungseinheit (34), falls die bestimmte Größe (33) der Frequenzkomponente der gefilterten Regelabweichung eine bestimmte Größe (33) der Frequenzkomponente der gefilterten Regelabweichung eines unmittelbar vorhergehenden Regelzyklus der Regelung (2) überschreitet; und
Anpassen eines Werts einer Vorwärtsverstärkung (36) durch Addieren eines Werts der Verstärkungsstufenbreite (35) zu dem Wert der Vorwärtsverstärkung (36) des unmittelbar vorhergehenden Regelzyklus der Regelung (2).

10. Treiber (1) nach Anspruch 9,
wobei die Verstärkungsanpassungseinheit (34) ferner konfiguriert ist zum
Abrufen eines Anfangswerts der Vorwärtsverstärkung (36) in Abhängigkeit von der bestimmten Größe (33) der Frequenzkomponente der gefilterten Regelabweichung aus einer Nachschlagetabelle des Treibers (1).

11. Treiber (1) nach Anspruch 9 oder 10,
wobei die Verstärkungsanpassungseinheit (34) ferner konfiguriert ist zum
Abrufen eines Anfangswerts der Verstärkungsstufenbreite (35) aus der Nachschlagetabelle des Treibers (1).

12. Treiber (1) nach einem der Ansprüche 9 bis 11,
wobei die Vorwärtsregelung (3) ferner konfiguriert ist zum
Anpassen der Regelgröße (24) der Regelung (2) durch Addieren eines Produkts aus dem angepassten Wert der Vorwärtsverstärkung (36) und der Frequenzkomponente (29) der Zwischenkreisspannung des SMPS (27).

13. Treiber (1) nach einem der vorstehenden Ansprüche,
die Regelung (2) ferner umfassend
einen Regler (23), der konfiguriert ist, um die Regelgröße (24) in Abhängigkeit von der Regelabweichung (22) bereitzustellen; und
einen Pulsweitenmodulations-Signalgenerator, PWM-Signalgenerator, (25), der konfiguriert ist, um eine Stellgröße (26) in Abhängigkeit von der Regelgröße (24) bereitzustellen;
die Regelgröße (28) umfassend einen Durchschnittswert des Stroms, mit dem die mindestens eine LED versorgt wird;
die Stellgröße (26) umfassend ein PWM-Gate-Treibersignal (26) für Leistungsschalter des SMPS (27);
die Regelgröße (24) umfassend einen Arbeitszyklus des PWM-Gate-Treibersignals (26);
die Regelabweichung (22) umfassend ein Differential der Regelgröße (28) und der Führungsgröße (21); und
die Führungsgröße (21) umfassend einen Nominalwert des Stroms, mit dem die mindestens eine LED versorgt wird.

14. Treiber (1) nach Anspruch 13,
der Regler (23) umfassend einen Proportional-Integral-Regler, PI-Regler.

15. Leuchte (4), umfassend
einen Treiber (1) nach einem der Ansprüche 1 bis 14; und
mindestens eine LED (5).

## Revendications

1. Circuit d'attaque (1) d'au moins une DEL, le circuit d'attaque (1) comprenant
une alimentation commutée, SMPS (27) configurée pour alimenter l'au moins une DEL ;
une commande en boucle fermée (2) pour réguler une variable commandée (28) fournie à l'au moins une DEL en fonction d'une variable de référence (21) ;
**caractérisé par**
une commande en amont (3) pour régler une variable de commande (24) de la commande en boucle fermée (2) en fonction d'une composante de fréquence d'une erreur de commande (22) de la commande en boucle fermée (2) et d'une composante de fréquence (29) d'une tension de liaison à courant continu de la SMPS (27).

2. Circuit d'attaque (1) selon la revendication 1,
la commande en amont (3) comprenant
un premier filtre à bande étroite (31) configuré pour filtrer l'erreur de commande (22) ; et
une unité de dérivation de composante de fréquence (32) configurée pour déterminer la composante de fréquence de l'erreur de commande (22) de la commande en boucle fermée (2).

3. Circuit d'attaque (1) selon la revendication 2,
l'unité de dérivation de composante de fréquence (32) comprenant
un circuit de détection de crête configuré pour déterminer une magnitude (33) d'une valeur de crête de l'erreur de commande filtrée à une fréquence centrale du premier filtre à bande étroite (31).

4. Circuit d'attaque (1) selon la revendication 2,
l'unité de dérivation de composante de fréquence (32) comprenant
un circuit de transformation de fréquence configuré pour déterminer une magnitude (33) d'une transformation de fréquence de l'erreur de commande filtrée à une fréquence centrale du premier filtre à bande étroite (31).

5. Circuit d'attaque (1) selon l'une quelconque des revendications 1 à 4,
la commande en amont (3) comprenant en outre
un second filtre à bande étroite (78) configuré pour déterminer la composante de fréquence (29) de la tension de liaison à courant continu de la SMPS (27).

6. Circuit d'attaque (1) selon la revendication 5,
la composante de fréquence (29) de la tension de liaison à courant continu de la SMPS (27) comprenant une tension de liaison à courant continu filtrée de la SMPS (27) à une fréquence centrale du second filtre à bande étroite (37).

7. Circuit d'attaque (1) selon l'une quelconque des revendications 5 ou 6 lorsqu'elle dépend de l'une quelconque des revendications 2 à 4,
la fréquence centrale respective des premier et second filtres à bande étroite (31, 37) comprenant une fréquence comprise dans une plage de deux fois la fréquence du réseau CA ± 10 %, et de préférence comprenant deux fois la fréquence du réseau CA.

8. Circuit d'attaque (1) selon la revendication 7,
la fréquence du réseau CA étant de 50 Hz ou 60 Hz.

9. Circuit d'attaque (1) selon l'une quelconque des revendications 3 à 8,
la commande en amont (3) comprenant en outre
une unité de réglage de gain (34) configurée pour
changer un signe d'une largeur de pas de gain (35) de l'unité de réglage de gain (34) si la magnitude déterminée (33) de la composante de fréquence de l'erreur de commande filtrée dépasse une magnitude déterminée (33) de la composante de fréquence de l'erreur de commande filtrée d'un cycle de commande immédiatement précédent de la commande en boucle fermée (2) ; et
régler une valeur de gain en amont (36) en ajoutant une valeur de la largeur de pas de gain (35) à la valeur de gain en amont (36) du cycle de commande immédiatement précédent de la commande en boucle fermée (2).

10. Circuit d'attaque (1) selon la revendication 9,
l'unité de réglage de gain (34) étant en outre configurée pour
récupérer une valeur initiale du gain en amont (36) en fonction de la magnitude déterminée (33) de la composante de fréquence de l'erreur de commande filtrée à partir d'une table de recherche du circuit d'attaque (1).

11. Circuit d'attaque (1) selon la revendication 9 ou la revendication 10,
l'unité de réglage de gain (34) étant en outre configurée pour
récupérer une valeur initiale de la largeur de pas de gain (35) dans la table de recherche du circuit d'attaque (1).

12. Circuit d'attaque (1) selon l'une quelconque des revendications 9 à 11,
la commande en amont (3) étant en outre configurée pour
régler la variable de commande (24) de la commande en boucle fermée (2) en ajoutant un produit de la valeur réglée du gain en amont (36) et de la composante de fréquence (29) de la tension de liaison en courant continu de la SMPS (27).

13. Circuit d'attaque (1) selon l'une quelconque des revendications précédentes,
la commande en boucle fermée (2) comprenant en outre
un dispositif de commande (23) configuré pour fournir la variable de commande (24) en fonction de l'erreur de commande (22) ; et
un générateur de signaux de modulation d'impulsions en durée, MID (25) configuré pour fournir une variable manipulée (26) en fonction de la variable de commande (24) ;
la variable commandée (28) comprenant une valeur moyenne du courant fourni à l'au moins une DEL ;
la variable manipulée (26) comprenant un signal d'attaque de grille MID (26) pour des commutateurs de puissance de la SMPS (27).
la variable de commande (24) comprenant un rapport cyclique du signal d'attaque de grille MID (26) ;
l'erreur de commande (22) comprenant un différentiel entre la variable commandée (28) et la variable de référence (21) ; et
la variable de référence (21) comprenant une valeur nominale du courant fourni à l'au moins une DEL.

14. Circuit d'attaque (1) selon la revendication 13,
le dispositif de commande (23) comprenant un dispositif de commande proportionnel-intégral (PI).

15. Luminaire (4) comprenant
un circuit d'attaque (1) selon l'une quelconque des revendications 1 à 14 ; et
au moins une DEL (5).
